# EUROPEAN PATENT APPLICATION

(11) **EP 4 603 936 A1**
(43) Date of publication of application: **20.08.2025**
(21) Application number: 23876461.7
(22) Date of filing: 15.09.2023
(51) Int. Cl.: G05D 1/20

(54) **LASER ROBOT PATH PLANNING METHOD, AND CHIP**

(30) Priority: 14.10.2022 CN 202211260240
(71) Applicant: Amicro Semiconductor Co., Ltd., Hengqin New District, Zhuhai City Guangdong 519000 (CN)
(72) Inventor: HUANG, Huibao, Zhuhai, Guangdong 519000 (CN); ZHOU, Hewen, Zhuhai, Guangdong 519000 (CN); CHEN, Zhuobiao, Zhuhai, Guangdong 519000 (CN); SUN, Ming, Zhuhai, Guangdong 519000 (CN); XU, Songzhou, Zhuhai, Guangdong 519000 (CN)
(74) Representative: Monteiro Alves, Inês
(86) International application number: PCT/CN2023/119017
(87) International publication number: WO 2024/078256

(57) **Abstract**

Disclosed in the present application are a laser robot path planning method, and a chip. The method comprises: acquiring a target starting point of a laser robot and a target end point of the laser robot; on the basis of a first map, determining whether the target starting point of the laser robot and the target end point of the laser robot are distributed in the same area; if yes, planning a movement path of the laser robot according to the target starting point and the target end point of the laser robot on the basis of the first map; and if no, executing laser robot passable area expansion on the first map on the basis of a plurality of passage line segments in a second map, and, on the basis of the first map which has been subjected to the laser robot passable area expansion, the target starting point of the laser robot, and the target end point of the laser robot, planning a movement path of the laser robot. On the basis of historical coverage information of the laser robot and the manner of eliminating part of boundaries affected by dynamic obstacles, the present application prevents the laser robot from being affected by position changing of the dynamic obstacles in an environment, thereby reasonably planning movement paths.

## Description

### FIELD

The present disclosure relates to the field of path planning technology, in particular to a laser robot path planning method and a chip.

### BACKGROUND

With the maturation of robot technology, more and more methods for map creation in robotics have emerged. Currently, as a main method, a map is created via laser radar, visual sensors, and/or inertial navigation systems. However, for the map created via the laser radar, it cannot reflect changes in an environment outside a collection range of the laser radar in real time. The change of dynamic obstacles in the environment is inevitable, especially with events like the opening and closing of room doors. For example, in a case that the map generated by the laser radar shows a room door as being closed, but a user opens the door outside the range of the laser radar and controls a robot to pass through the door into the room, the robot may receive erroneous navigation information based on the map generated by the laser radar, indicating that the room is inaccessible. This change of the dynamic obstacle causes the robot to report an error, as it cannot timely update the environment to reflect the change of the dynamic obstacles, adversely affecting the user experience.

### SUMMARY

An object of the present disclosure is to provide a laser robot path planning method and a chip. The technical solution is provided as follows.

In one aspect, the present disclosure provides in some embodiments a laser robot path planning method, including: obtaining a target start point and a target end point of a laser robot; determining, based on a first map, whether or not the target start point and the target end point of the laser robot are located within a same area; in a case that the target start point and the target end point are located within the same area, planning a movement path of the laser robot based on the first map using the target start point and the target end point; and in a case that the target start point and the target end point are located within different areas, expanding a passable area of the first map based on several passable line segments in a second map, and planning the movement path of the laser robot based on the expanded first map, the target start point, and the target end point. The first map is obtained by dividing a laser map into areas using a seed filling algorithm, and the second map is a map having several passable line segments generated based on a historical coverage map of the laser robot, the laser map, and a Voronoi diagram algorithm.

Further, the obtaining the first map by dividing the laser map into areas using the seed filling algorithm specifically includes: performing connectivity judgment on each pixel in the laser map; assigning a color to the pixel based on a connectivity judgment result until the colors are assigned to all pixels in the laser map; and obtaining the first map based on the assigned colors. A same color is assigned to the pixels in a connected area, and different colors are assigned to the pixels in disconnected areas.

Further, the determining, based on the first map, whether or not the target start point and the target end point of the laser robot are located within the same area specifically includes: determining a pixel for the target start point and a pixel for the target end point in the first map; determining a color assigned to the pixel for the target start point; determining a color assigned to the pixel for the target end point; determining whether or not the color assigned to the pixel for the target start point is the same as the color assigned to the pixel for the target end point; and in a case that the color assigned to the pixel for the target start point is the same as the color assigned to the pixel for the target end point, determining that the target start point and the target end point are located within the same area, and in a case that the color assigned to the pixel for the target start point is different from the color assigned to the pixel for the target end point, determining that the target start point and the target end point are located within different areas.

Further, the generating the second map having several passable line segments based on the historical coverage map of the laser robot, the laser map, and the Voronoi diagram algorithm specifically includes: changing a dynamic obstacle coverage area of the laser map using the historical coverage map; and generating the second map having several passable line segments using the Voronoi diagram algorithm based on the changed laser map.

Further, the changing the dynamic obstacle coverage area of the laser map using the historical coverage map specifically includes: traversing each obstacle coverage area in the laser map based on a historical coverage area of the laser robot in the historical coverage map, and determining whether or not the obstacle coverage area is the historical coverage area; in a case that the obstacle coverage area is the historical coverage area, determining the obstacle coverage area as the dynamic obstacle coverage area; and changing the dynamic obstacle coverage area of the laser map to a passable area of the laser robot.

Further, the generating the second map having several passable line segments using the Voronoi diagram algorithm based on the changed laser map specifically includes: obtaining a position of each obstacle in the changed laser map, and taking the position as a discrete point; constructing a Delaunay triangulated network based on all discrete points; traversing the Delaunay triangulated network to determine whether or not there is an adjacent common-edge triangle corresponding to each of three edges of each triangle; and generating the second map having several passable line segments based on whether or not there is an adjacent common-edge triangle corresponding to each of the three edges of the triangle.

Further, the generating the second map having several passable line segments based on whether or not there is an adjacent common-edge triangle corresponding to each of the three edges of each triangle specifically includes: in a case that there is an adjacent common-edge triangle corresponding to one edge of a triangle, generating a passable line segment by connecting a circumcenter of the triangle and a circumcenter of the adjacent common-edge triangle; and in a case that there is no adjacent common-edge triangle corresponding to one edge of a triangle, generating a perpendicular bisector based on the circumcenter of the triangle and the edge of the triangle without an adjacent common-edge triangle as a passable line segment.

Further, the generating the perpendicular bisector based on the circumcenter of the triangle and the edge of the triangle without an adjacent common-edge triangle as the passable line segment specifically includes: forming the perpendicular bisector from the circumcenter of the triangle to the edge of the triangle without an adjacent common-edge triangle, with the circumcenter of the triangle as one end point of the perpendicular bisector and a point on the edge of the triangle separated from an area boundary by a distance smaller than a first predetermined value as another end point of the perpendicular bisector, and taking the perpendicular bisector as the passable line segment.

Further, the expanding the passable area of the first map using the several passable line segments in the second map specifically includes: determining an area where the target start point is located and an area where the target end point is located; traversing each passable line segment to determine whether or not the passable line segment includes a portion located within the area where the target start point is located and another portion located within the area where the target end point is located; in a case that the passable line segment includes the portion located within the area where the target start point is located and the portion located within the area where the target end point is located, obtaining a cross-area path from the passable line segment; and expanding the passable area of the first map based on the cross-area path.

Further, the obtaining the cross-area path from the passable line segment specifically includes: enumerating coordinates of points of the passable line segment from one end of the passable line segment and determining an area where each point is located; determining whether or not an expected change occurs between an area where a current point is located and an area where a previous point is located, and in a case that the expected change occurs between the area where the current point is located and the area where the previous point is located, recording the coordinates of the current point and the coordinates of the previous point; and generating a shortest line segment that includes all the points having the recorded coordinates as the cross-area path. The expected change indicates that the current point is located within the area where the target start point is located and the previous point is located within the area where the target end point is located, or indicates that the current point is located within the area where the target end point is located and the previous point is located within the area where the target start point is located.

Further, the expanding the passable area of the first map based on the cross-area path specifically includes: extending the cross-area path in the first map to a left side and a right side by a predetermined width to obtain an area as the passable area. The predetermined width is greater than or equal to a radius of a body of the laser robot.

In another aspect, the present disclosure provides in some embodiments a chip storing therein a computer program. The computer program is executed by a processor to implement the above-mentioned laser robot path planning method.

According to the laser robot path planning method in the embodiments of the present disclosure, in a case that it is difficult to update the map with the change in the environment in real time, an area affected by the dynamic obstacles is expanded into the passable area of the laser robot based on historical coverage information of the laser robot, so as to prevent the laser robot from being adversely affected by the position change of the dynamic obstacles, thereby to reasonably plan the movement path.

### BRIEF DESCRIPTION OF THE DRAWINGS

Fig. 1 is a flow chart of a laser robot path planning method according to an embodiment of the present disclosure;
Fig. 2 is a schematic view of a first map according to an embodiment of the present disclosure;
Fig. 3 is a schematic view of a historical coverage map according to an embodiment of the present disclosure;
Fig. 4 is a schematic view of a laser map after changing a dynamic obstacle coverage area according to an embodiment of the present disclosure;
Fig. 5 is a schematic view of a second map according to an embodiment of the present disclosure; and
Fig. 6 is a schematic view of the first map after expanding a passable area of a laser robot according to an embodiment of the present disclosure.

### DETAILED DESCRIPTION

In order to make the objects, the technical solutions and the advantages of the present disclosure more apparent, the present disclosure will be described hereinafter in conjunction with the drawings and embodiments. It should be appreciated that, the following embodiments are for illustrative purposes only but shall not construed as limiting the present disclosure, and based on these embodiments, a person skilled in the art may, without any creative effort, obtain the other embodiments, which also fall within the scope of the present disclosure.

Obviously, the following drawings merely relate to some examples or embodiments of the present disclosure, and a person skilled in the art may, without any creative effort, apply the present disclosure to the other similar scenarios based on these drawings. In addition, it should be appreciated that, although the efforts in the development process are complicated and tedious, any design or manufacturing modifications made on the basis of the present disclosure are conventional technical means, and should not be construed as insufficient disclosure.

Unless otherwise defined, any technical or scientific term used herein shall have the common meaning understood by a person of ordinary skills. Such words as "one" or "one of" are merely used to represent the existence of at least one member, rather than to limit the number thereof. Such words as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. Such words as "first", "second" and "third" involved in the present disclosure are merely used to differentiate similar objects rather than to represent any specific order.

The present disclosure provides in a first embodiment a laser robot path planning method, which is applied to a robot using a laser sensor for the detection of an environment to eliminate an influence caused by a dynamic obstacle in the environment on the path planning of the laser robot.

The laser robot path planning method specifically includes the following steps.

Before the path planning, the laser robot is controlled to obtain a laser map, and then divide the laser map into areas using a seed filling algorithm to obtain a first map with different areas. Specifically, the seed filling algorithm is an algorithm for assigning colors or values to all pixels in a polygonal area from inside to outside starting from an interior point of the polygonal area, so that all the pixels have a same color or value, and thereby different areas are differentiated from each other by means the colors or values of the pixels.

A second map having several passable line segments is generated based on a historical coverage map of the laser robot, the laser map, and a Voronoi diagram algorithm. To be specific, a dynamic obstacle coverage area in an environment is determined by comparing a historical coverage map of the laser robot with the laser map. The dynamic obstacle coverage area refers to an area covered by a dynamic obstacle, and the dynamic obstacle refers to an obstacle whose position changes dynamically in the environment, e.g., door, chair or toy. The Voronoi diagram algorithm is an algorithm for generating an edge whose two end points are spaced apart from two discrete points by an equal distance, and it is commonly used to solve an adjacency problem. In the embodiment of the present disclosure, the Voronoi diagram algorithm is used to generate an edge whose two end points are spaced apart from two obstacles by an equal distance as a passable line segment for the path planning.

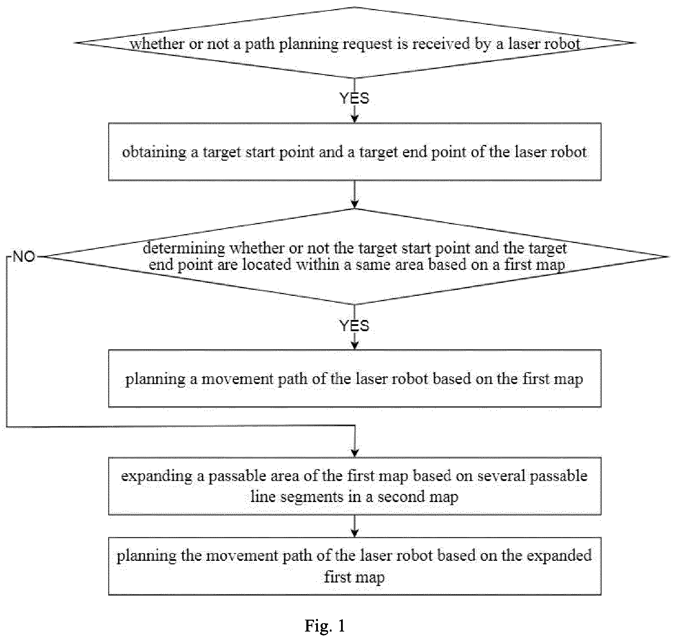

As shown in Fig. 1, upon the receipt of a path planning request, the laser robot obtains a target start point and a target end point of the laser robot. The target start point refers to a starting position of a path of the laser robot indicated in the path planning request, which includes, but not limited to, a current position of the laser robot or any other position in the environment. The target end point refers to an end position of the path indicated in the path planning request.

Whether or not the target start point and the target end point of the laser robot are located in a same area is determined based on the first map. Specifically, the first map is divided into several areas using the seed filling algorithm, and pixels in different areas are assigned with different colors or values. Hence, whether or not the target start point and the target end point of the laser robot are located within a same area may be determined based on different colors or values of different areas in the first map.

In a case that the target start point and the target end point of the laser robot are located within the same area, a movement path of the laser robot is planned based on the first map. Specifically, in a case that the target start point and the target end point are located within the same area, it means that the laser robot does not need to perform cross-area navigation for a current task, and such a dynamic obstacle as door may not adversely affect the movement path of the laser robot, so it is unnecessary to control the laser robot to plan the movement path based on the second map. It should be appreciated that, the dynamic obstacles include, but not limited to, movable obstacles that stop the laser robot from entering a room, such as doors, barriers, or fences.

In a case that the target start point and the target end point of the laser robot are located within different areas, a passable area of the first map is expanded based on several passable line segments in the second map, and the movement path of the laser robot is planned based on the expanded first map.

Specifically, in the embodiments of the present disclosure, whether or not the target start point and the target end point are located within a same area is used to determine whether or not to perform boundary elimination in some areas. In a case that the target start point and the target end point are located within different areas, such a dynamic obstacle as door may adversely affect a navigation path of the laser robot. Hence, in a case that it is difficult to update the map with the environmental change in real time, the boundary of the area affected by the dynamic obstacle is eliminated based on the historical coverage map of the laser robot, so as to prevent the laser robot from being adversely affected by the position change of the dynamic obstacles in the environment, thereby to reasonably plan the movement path.

In a second embodiment of the present disclosure, in the laser robot path planning method, the obtaining the first map by dividing the laser map into areas using the seed filling algorithm specifically includes the following steps.

Connectivity judgment is performed on each pixel in the laser map. To be specific, the connectivity judgment is performed by performing four-connected or eight-connected seed boundary filling in a stack-based manner, which is known in the art and thus will not be particularly defined herein.

A color is assigned to the pixel based on a connectivity judgment result until the colors are assigned to all pixels in the laser map, and the first map having different areas is obtained based on the assigned colors. A same color is assigned to the pixels in a connected area, and different colors are assigned to the pixels in disconnected areas. In this embodiment of the present disclosure, through assigning the colors to the pixels, it is able to determine an area boundary merely on the basis of the colors, thereby to divide the laser map into areas.

In a third embodiment of the present disclosure, in the laser robot path planning method, the determining, based on the first map, whether or not the target start point and the target end point of the laser robot are located within the same area specifically includes the following steps.

A pixel for the target start point and a pixel for the target end point are determined in the first map, and then a color assigned to the pixel for the target start point and a color assigned to the pixel for the target end point are determined. To be specific, through determining the pixels corresponding to the target start point and the target end point in the first map, it is able to determine the assigned colors based on the pixels.

Then, whether or not the color assigned to the pixel for the target start point is the same as the color assigned to the pixel for the target end point is determined. In a case that the color assigned to the pixel for the target start point is the same as the color assigned to the pixel for the target end point, the target start point and the target end point are located within the same area, and in a case that the color assigned to the pixel for the target start point is different from the color assigned to the pixel for the target end point, the target start point and the target end point are located within different areas.

In this embodiment of the present disclosure, whether or not the target start point and the target end point are located within the same area is determined based on the color assigned to each pixel in the first map, so as to enable the laser robot to plan the movement path based on the area where the target start point is located and the area where the target end point is located, thereby to improve the efficiency and accuracy of the path planning.

In a fourth embodiment of the present disclosure, in the laser robot path planning method, the generating the second map having several passable line segments based on the historical coverage map of the laser robot, the laser map, and the Voronoi diagram algorithm specifically includes: changing a dynamic obstacle coverage area of the laser map using the historical coverage map; and generating the second map having several passable line segments using the Voronoi diagram algorithm based on the changed laser map.

The changing the dynamic obstacle coverage area of the laser map using the historical coverage map specifically includes: traversing each obstacle coverage area in the laser map based on a historical coverage area of the laser robot in the historical coverage map, and determining whether or not the obstacle coverage area is the historical coverage area; in a case that the obstacle coverage area is the historical coverage area, determining the obstacle coverage area as the dynamic obstacle coverage area; and changing the dynamic obstacle coverage area of the laser map to a passable area of the laser robot. To be specific, the determining whether or not each obstacle coverage area in the laser map is the historical coverage area of the laser robot includes, but not limited to, determining whether or not historical coverage information of the laser robot includes a historical coverage area at a same position based on position information of the obstacle coverage area in the laser map. In a case that the obstacle coverage area is determined as the dynamic obstacle coverage area, it means that the obstacle coverage area is an area through which the laser robot ever passed, and an obstacle in this area is a dynamic obstacle. After a position of the dynamic obstacle is changed in some cases, the laser robot may pass through the obstacle coverage area.

In a fifth embodiment of the present disclosure, in the laser robot path planning method, the generating the second map having several passable line segments using the Voronoi diagram algorithm based on the changed laser map specifically includes the following steps.

A position of each obstacle in the changed laser map is obtained, and the position is taken as a discrete point. Then, a Delaunay triangulated network is constructed based on all discrete points, the Delaunay triangulated network is traversed to determine whether or not there is an adjacent common-edge triangle corresponding to each of three edges of each triangle, and the second map having several passable line segments is generated based on whether or not there is an adjacent common-edge triangle corresponding to each of the three edges of the triangle. Specifically, the Delaunay triangulated network refers to a set of connected, nonoverlapping triangles whose circumcircles do not contain any other points in a plane. The adjacent common-edge triangles refer to two triangles that are connected via a common edge. In this embodiment of the present disclosure, the Delaunay triangulated network is constructed to process the positions of all irregularly distributed obstacles in the laser map after changing the dynamic obstacle coverage area, the fitting is performed based on distribution characteristics of the discrete points, and the corresponding passable line segments are generated based on whether or not there is the common-edge triangle, so as to enable the laser robot to determine a passable line segment away from the obstacle based on the position of the obstacle, thereby to improve the obstacle avoidance efficiency of the laser robot.

In a sixth embodiment of the present disclosure, in the laser robot path planning method, the generating the second map having several passable line segments based on whether or not there is an adjacent common-edge triangle corresponding to each of the three edges of each triangle specifically includes: in a case that there is an adjacent common-edge triangle corresponding to one edge of a triangle, generating a passable line segment by connecting a circumcenter of the triangle and a circumcenter of the adjacent common-edge triangle; and in a case that there is no adjacent common-edge triangle corresponding to one edge of a triangle, generating a perpendicular bisector based on the circumcenter of the triangle and the edge of the triangle without an adjacent common-edge triangle as a passable line segment. In this embodiment of the present disclosure, based on a nearest neighboring principle, the line segment connecting the circumcenters of the adjacent common-edge triangles is taken as the passable line segment.

In a seventh embodiment of the present disclosure, in the laser robot path planning method, the generating the perpendicular bisector based on the circumcenter of the triangle and the edge of the triangle without an adjacent common-edge triangle as the passable line segment specifically includes: forming the perpendicular bisector from the circumcenter of the triangle to the edge of the triangle without an adjacent common-edge triangle, with the circumcenter of the triangle as one end point of the perpendicular bisector and a point on the edge of the triangle separated from an area boundary by a distance smaller than a first predetermined value as another end point of the perpendicular bisector, and taking the perpendicular bisector as a passable line segment. In this embodiment of the present disclosure, the perpendicular bisector is taken as the passable line segment, so it is spaced apart from the obstacles, i.e., the two end points of the common edge, by an equal distance. In a case that the passable line segment is taken as the movement path, the laser robot may move at a position away from the obstacle in the environment, so the laser robot may avoid the obstacles orderly,

In an eighth embodiment of the present disclosure, the expanding the passable area of the first map using the several passable line segments in the second map specifically includes: obtaining an area where the target start point is located and an area where the target end point is located; traversing each passable line segment to determine whether or not the passable line segment includes a portion located within the area where the target start point is located and another portion located within the area where the target end point is located; in a case that the passable line segment includes the portion located within the area where the target start point is located and the portion located within the area where the target end point is located, obtaining a cross-area path from the passable line segment; and expanding the passable area of the first map based on the cross-area path. In this embodiment of the present disclosure, an area where each pixel point in the passable line segment is located is determined, and the cross-area path is determined based on the areas where the passable line segment is located, so as to determine a position of such a dynamic obstacle as door based on the cross-area path, thereby to determine that the laser robot can work in a cross-area manner along the cross-area path.

In a ninth embodiment of the present disclosure, in the laser robot path planning method, the obtaining the cross-area path from the passable line segment specifically includes: enumerating coordinates of points of the passable line segment from one end of the passable line segment and determining an area where each point is located; determining whether or not an expected change occurs between an area where a current point is located and an area where a previous point is located, and in a case that the expected change occurs between the area where the current point is located and the area where the previous point is located, recording the coordinates of the current point and the coordinates of the previous point; and taking a shortest line segment that includes all the points having the recorded coordinates as the cross-area path. The expected change indicates that the current point is located within the area where the target start point is located and the previous point is located within the area where the target end point is located, or indicates that the current point is located within the area where the target end point is located and the previous point is located within the area where the target start point is located.

In a tenth embodiment of the present disclosure, in the laser robot path planning method, the expanding the passable area of the first map based on the cross-area path specifically includes: extending the cross-area path in the first map to a left side and a right side by a predetermined width to obtain an area as the passable area. The predetermined width is greater than or equal to a radius of a body of the laser robot. To be specific, in this embodiment of the present disclosure, the passable area is expanded based on the cross-area path by the predetermined width greater than or equal to the radius of the body of the laser body, so that the passable area is at least provided with a sufficient width for the passthrough of the laser robot.

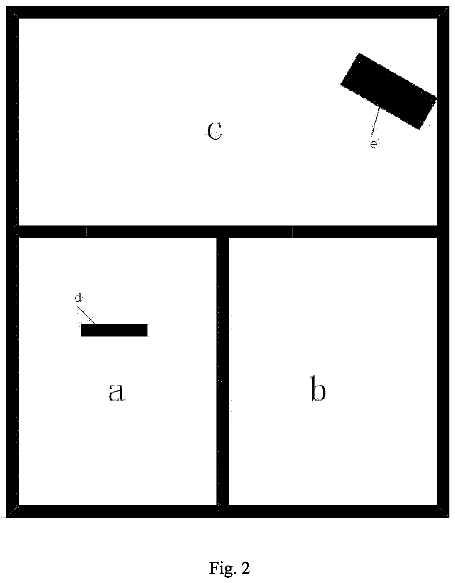

In a possible embodiment of the present disclosure, the laser robot divides the laser map into areas using the seed filling algorithm to obtain the first map having different areas. Fig. 2 shows the first map having different areas, i.e., areas a, b and c. The pixels in each area are connected, different colors are assigned to the pixels in the areas a, b and c, and a same color is assigned to the pixels in a same area. It should be appreciated that, the area a in the first map includes an obstacle coverage area d, and the area c includes an obstacle coverage area e. In the embodiments of the present disclosure, rooms in the laser map are determined by assigning colors to the pixels using the seed filling algorithm, so as to rapidly determine the area connectivity between the pixels and the areas where the pixels are located based on the colors.

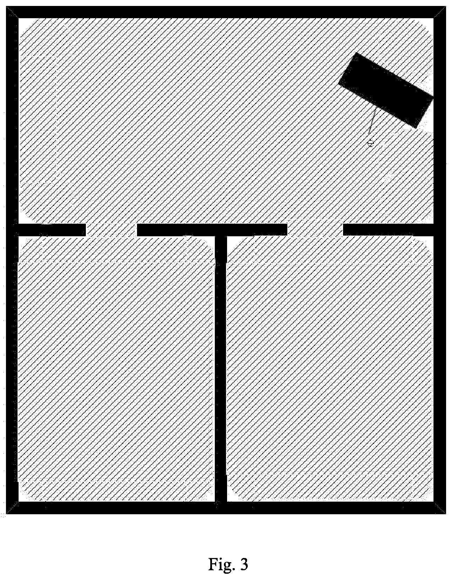

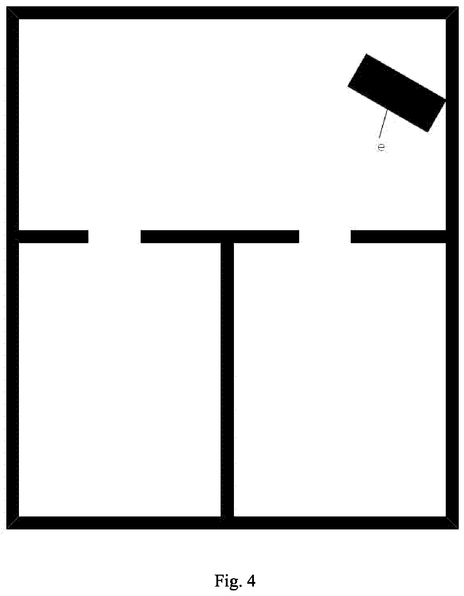

Fig. 3 shows a historical coverage map of the laser robot, and a slashed area in the historical coverage map is a historical coverage area of the laser robot. The historical coverage area is obtained based on the historical map. Through comparing Fig. 2 with Fig. 3, the obstacle coverage area d in Fig. 2 is the historical coverage area, i.e., an obstacle in the obstacle coverage area d is a dynamic obstacle, e.g., a movable fence or a movable cabinet. In addition, in Fig. 3, the area a is connected to the area c, and the area b is connected to the area c, i.e., there are such dynamic obstacles as doors between the area a and the area c and between the area b and the area c. Fig. 4 shows the laser map after changing the dynamic obstacle coverage area obtained based on the historical coverage map in Fig. 3. Through comparing Fig. 2 with Fig. 4, the dynamic obstacle coverage area in Fig. 4 is changed to a passable area of the laser robot, i.e., the dynamic obstacle coverage area is removed. During the path planning, a navigation error may be reported after the dynamic obstacle moves. As compared with the first map obtained by dividing the laser map directly collected by the laser robot into areas, through the laser map obtained after changing the dynamic obstacle coverage area, it is able to effectively reduce the influence caused by the dynamic obstacle on the path planning.

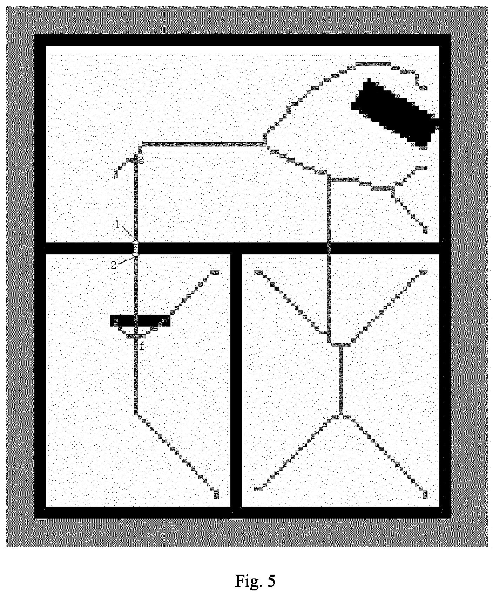

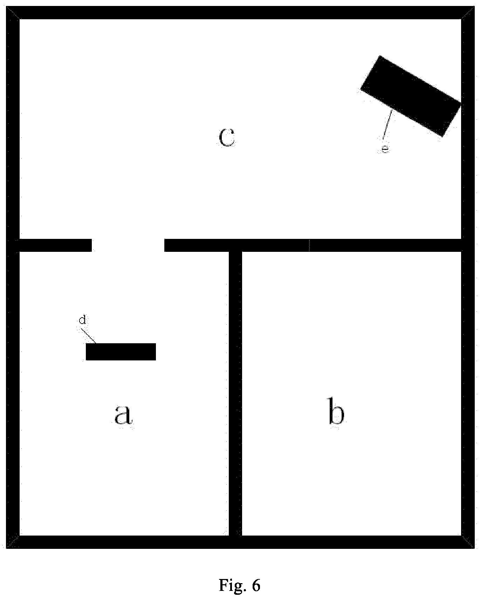

Fig. 5 shows the second map having several passable line segments generated by processing the changed laser map in Fig. 4 using the Voronoi diagram algorithm, and a gray line segment represents the passable line segment. In a case that the area where the target start point is located and the area where the target end point is located are the areas a and c respectively, the passable line segments in the second map are traversed to determine that a passable line segment fg includes a portion located within the area where the target start point is located and a portion located within the area where the target end point is located. Coordinates of points of the passable line segment fg are enumerated, and in a case that the expected change occurs at points 1 and 2, the coordinates of the points 1 and 2 are recorded, and then a shortest line segment including the points 1 and 2 in the passable line segment fg is taken as the cross-area path. Fig. 6 shows a map generated after expanding the passible area of the first map based on the cross-area path. In Fig. 6, the area a is connected to the area c, the dynamic obstacle 2 still remains in the area a, with such a dynamic obstacle as door between the area a and the area c being removed merely, and the other dynamic obstacle being reserved as in an actual environment.

The present disclosure provides in a tenth embodiment a chip storing therein a computer program. The computer program is executed by a processor to implement the above-mentioned laser robot path planning method. It should be appreciated that, all or a part of the processes in the above-mentioned method may be implemented through relevant hardware under the control of the computer program. The computer program may be stored in a non-volatile computer-readable storage medium, and when the computer program is executed, it includes the processes of the above-mentioned method. In addition, references to memory, storage, database or any other media may include a non-volatile memory and/or a volatile memory. The non-volatile memory may include read-only memory (ROM), programmable memory (PROM), electrically programmable read-only memory (EPROM), electrically erasable programmable read-only memory (EEPROM), or flash memory. The volatile memory may include random access memory (RAM) or external high-speed buffer memory.

The technical features in the embodiments of the present disclosure may be combined in any way. For clarification, not all possible combinations have been described in the embodiments of the present disclosure. However, these combinations shall also fall within the scope of the present disclosure in the case of no conflict.

The above embodiments are for illustrative purposes only, but shall not be construed as limiting the scope of the present disclosure. It should be appreciated that, a person skilled in the art may further make improvements and modifications without departing from the principle of the present disclosure, and these improvements and modifications shall also fall within the scope of the present disclosure.

## Claims

1. A laser robot path planning method, comprising:
obtaining a target start point and a target end point of a laser robot;
determining, based on a first map, whether or not the target start point and the target end point of the laser robot are located within a same area;
in a case that the target start point and the target end point are located within the same area, planning a movement path of the laser robot based on the first map using the target start point and the target end point; and
in a case that the target start point and the target end point are located within different areas, expanding a passable area of the first map based on several passable line segments in a second map, and planning the movement path of the laser robot based on the expanded first map, the target start point, and the target end point,
wherein the first map is obtained by dividing a laser map into areas using a seed filling algorithm, and the second map is a map having several passable line segments generated based on a historical coverage map of the laser robot, the laser map, and a Voronoi diagram algorithm.

2. The laser robot path planning method according to claim 1, wherein the obtaining the first map by dividing the laser map into areas using the seed filling algorithm specifically comprises:
performing connectivity judgment on each pixel in the laser map;
assigning a color to the pixel based on a connectivity judgment result until the colors are assigned to all pixels in the laser map; and
obtaining the first map based on the assigned colors,
wherein a same color is assigned to the pixels in a connected area, and different colors are assigned to the pixels in disconnected areas.

3. The laser robot path planning method according to claim 2, wherein the determining, based on the first map, whether or not the target start point and the target end point of the laser robot are located within the same area specifically comprises:
determining a pixel for the target start point and a pixel for the target end point in the first map;
determining a color assigned to the pixel for the target start point;
determining a color assigned to the pixel for the target end point;
determining whether or not the color assigned to the pixel for the target start point is the same as the color assigned to the pixel for the target end point; and
in a case that the color assigned to the pixel for the target start point is the same as the color assigned to the pixel for the target end point, determining that the target start point and the target end point are located within the same area, and in a case that the color assigned to the pixel for the target start point is different from the color assigned to the pixel for the target end point, determining that the target start point and the target end point are located within different areas.

4. The laser robot path planning method according to claim 1, wherein the generating the second map having several passable line segments based on the historical coverage map of the laser robot, the laser map, and the Voronoi diagram algorithm specifically comprises:
changing a dynamic obstacle coverage area of the laser map using the historical coverage map; and
generating the second map having several passable line segments using the Voronoi diagram algorithm based on the changed laser map.

5. The laser robot path planning method according to claim 4, wherein the changing the dynamic obstacle coverage area of the laser map using the historical coverage map specifically comprises:
traversing each obstacle coverage area in the laser map based on a historical coverage area of the laser robot in the historical coverage map, and determining whether or not the obstacle coverage area is the historical coverage area;
in a case that the obstacle coverage area is the historical coverage area, determining the obstacle coverage area as the dynamic obstacle coverage area; and
changing the dynamic obstacle coverage area of the laser map to a passable area of the laser robot.

6. The laser robot path planning method according to claim 5, wherein the generating the second map having several passable line segments using the Voronoi diagram algorithm based on the changed laser map specifically comprises:
obtaining a position of each obstacle in the changed laser map;
taking the position as a discrete point;
constructing a Delaunay triangulated network based on all discrete points;
traversing the Delaunay triangulated network to determine whether or not there is an adjacent common-edge triangle corresponding to each of three edges of each triangle; and
generating the second map having several passable line segments based on whether or not there is an adjacent common-edge triangle corresponding to each of the three edges of the triangle.

7. The laser robot path planning method according to claim 6, wherein the generating the second map having several passable line segments based on whether or not there is an adjacent common-edge triangle corresponding to each of the three edges of each triangle specifically comprises:
in a case that there is an adjacent common-edge triangle corresponding to one edge of a triangle, generating a passable line segment by connecting a circumcenter of the triangle and a circumcenter of the adjacent common-edge triangle; and
in a case that there is no adjacent common-edge triangle corresponding to one edge of a triangle, generating a perpendicular bisector based on the circumcenter of the triangle and the edge of the triangle without an adjacent common-edge triangle as a passable line segment.

8. The laser robot path planning method according to claim 7, wherein the generating the perpendicular bisector based on the circumcenter of the triangle and the edge of the triangle without an adjacent common-edge triangle as the passable line segment specifically comprises: forming the perpendicular bisector from the circumcenter of the triangle to the edge of the triangle without an adjacent common-edge triangle, with the circumcenter of the triangle as one end point of the perpendicular bisector and a point on the edge of the triangle separated from an area boundary by a distance smaller than a first predetermined value as another end point of the perpendicular bisector, and taking the perpendicular bisector as a passable line segment.

9. The laser robot path planning method according to claim 1, wherein the expanding the passable area of the first map using the several passable line segments in the second map specifically comprises:
obtaining an area where the target start point is located and an area where the target end point is located;
traversing each passable line segment to determine whether or not the passable line segment comprises a portion located within the area where the target start point is located and another portion located within the area where the target end point is located;
in a case that the passable line segment comprises the portion located within the area where the target start point is located and the portion located within the area where the target end point is located, obtaining a cross-area path from the passable line segment; and
expanding the passable area of the first map based on the cross-area path.

10. The laser robot path planning method according to claim 9, wherein the obtaining the cross-area path from the passable line segment specifically comprises:
enumerating coordinates of points of the passable line segment from one end of the passable line segment;
determining an area where each point is located;
determining whether or not an expected change occurs between an area where a current point is located and an area where a previous point is located, and in a case that the expected change occurs between the area where the current point is located and the area where the previous point is located, recording the coordinates of the current point and the coordinates of the previous point; and
generating a shortest line segment that comprises all the points having the recorded coordinates as the cross-area path,
wherein the expected change indicates that the current point is located within the area where the target start point is located and the previous point is located within the area where the target end point is located, or indicates that the current point is located within the area where the target end point is located and the previous point is located within the area where the target start point is located.

11. The laser robot path planning method according to claim 10, wherein the expanding the passable area of the first map based on the cross-area path specifically comprises:
extending the cross-area path to a left side and a right side by a predetermined width to obtain an area as the passable area for the laser robot,
wherein the predetermined width is greater than or equal to a radius of a body of the laser robot.

12. A chip storing therein a computer program, wherein the computer program is executed by a processor to implement the laser robot path planning method according to any one of claims 1 to 11.
